# EUROPEAN PATENT APPLICATION

(11) **EP 1 182 893 A1**
(43) Date of publication of application: **27.02.2002**
(21) Application number: 00810745.0
(22) Date of filing: 22.08.2000
(51) Int. Cl.: H04Q 7/22, H04Q 7/20, G06F 17/30

(54) **Mobile terminal-controlled hierarchical information retrieval using the short message system**

(71) Applicant: Rixxo AG, 6343 Rotkreuz (CH)
(72) Inventor: Martignoni, Stephane, 8008 Zürich (CH); Spierings, Robbert, 8706 Meilen (CH); Käser, Reto, 8965 Berikon (CH)
(74) Representative: Wagner, Wolfgang, Dr. Phil., Dipl.-Phys.

(57) **Abstract**

Information from a data base is retrieved via a cellular network by the following steps: (a) transmission of a SMS message from the network to the mobile station, usually a cellular telephone containing the first hierarchical level of information as well as an index to the second hierarchical level of information; (b) the transmission of a response SMS message from the cellular phone to the network containing the index to the second hierarchical level of information; (c) the transmission from the network to the cellular telephone of a SMS message containing the second hierarchical level of information as well as an index to the third hierarchical level of information. The method further includes steps to provide access to subsequent hierarchical levels of information. The method also includes steps to provide backward hierarchical information.

## Description

### Field of the invention

The Short Message Service (SMS) allows alphanumerical messages of up to 160 7-bit ASCII characters to be transmitted to or from the subscriber via a cellular network. In the mobile terminal case the message is typically displayed on the mobile terminal upon reception. On the mobile terminal the last received message can be stored in non-volatile memory. The SMS provides procedures for receiving, reading, editing, clearing, storing and sending messages. The network ensures resending of the SMS message in case of transmission failure once the mobile terminal is reachable again.

### Prior art

US-A-5 692 032 discloses a method for transmitting a SMS message from a network to the cellular terminal, presenting it to a user, determining if the presented message requires a manual acknowledgement and determining if the user's single key depression is the correct manual acknowledgement. However, the document does not in any way teach or suggest a method by which a user might access and retrieve information stored in a hierarchical way in the network. The suggested method is a simple one level information retrieval process.

US-A-5 577 103 discloses a method of providing a subscriber in a cellular network with information from a subscriber service profile. The service profile information is transmitted using SMS message from the mobile switching centre to the mobile station. The service profile information is then provided in a voice message or displayed on the visual display of the mobile station. The method is, however, limited to the provisioning of a specific type of information stored in the network (i.e. subscriber service profile) and to a single level of information. The document does not teach or suggest any method of retrieving hierarchically stored information using SMS.

### Summary of the invention

It is the objective of the invention to provide an efficient and simple technique for enabling a subscriber in a cellular network to access and retrieve information stored in a hierarchical way using SMS.

The present invention provides a subscriber in a cellular network (user) with a mechanism for retrieving information stored in a hierarchical way. The user can control the information using SMS. The user can also navigate through the different information levels using SMS. A process for retrieving this information includes the following steps: (a) transmission of a SMS message from the network to a mobile station, usually a cellular telephone, containing the first hierarchical level of information as well as an index to the second hierarchical level of information; (b) transmission of a response message from the mobile station to the network containing the index to the second hierarchical level of information; (c) transmission of a message from the network to the mobile station containing the second hierarchical level of information as well as an index to the third hierarchical level of information. The method further includes steps to provide subsequent hierarchical levels of information. The process also includes steps to provide backward hierarchical information. User controlled hierarchical information provisioning using SMS extends the SMS capability with the navigation functionality.

### Brief description of the drawings

The invention will be better understood when read in conjunction with the attached drawings where
- Fig. 1: illustrates information that is stored in a hierarchical way, which contains the specific information of the indicated level and an index to the next level of information. For the purpose of understanding the method, only three hierarchical levels of information with three indexes to a subsequent level of information are shown,
- Fig. 2: is a message flow diagram illustrating the message utilised in the embodiment of the present invention to retrieve hierarchically stored information in a database using SMS in a cellular network, and
- Fig. 3a,b: a logical flow diagram that illustrates a method for retrieving hierarchically stored information using SMS.

### Description of the preferred embodiments

The embodiments of the invention described below are implemented as logical operations using SMS messages. In the system of the present invention, SMS is used to retrieve hierarchically stored information from the network.

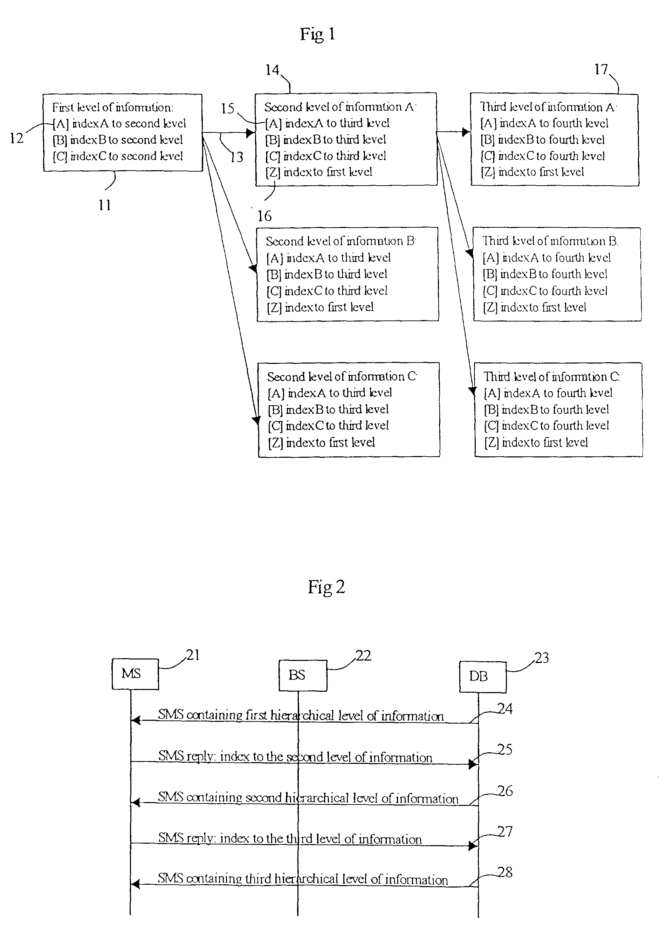

Reference is made to Fig. 1 for illustrating hierarchically stored information. Only the three first levels of information with three indexes to a subsequent level of information are drawn for the sake of simplicity. The first level of information frame 11 contains the information that is presented to the user and an index 12 to a second level of information. 13 is the logical link between the first and the second level of information. The second level of information frame 14 contains the information that is presented to the user and an index 15 to the third level of information as well as an index 16 to the first level of information. The third level of information is represented in frame 17. It should be understood that the process according to the invention is not limited to three levels of information or to three indices to the subsequent hierarchical sublevel of information.

Fig. 2 is a message flow diagram illustrating the message utilisation in the preferred embodiment of the present invention to retrieve hierarchically stored information for a database using SMS. The SMS messages are sent between a mobile station (MS) 21, the base station (BS) 22 and the database (DB) 23, all of which are known in the art. The database contains hierarchically stored information as described above in connection with Fig. 1.

The retrieval of stored information starts with the network sending a SMS message 24 containing the first hierarchical level of information stored in the database. The SMS message contains the information of the first level and a list of indexes to the second hierarchical level of information (12). The user replies 25 to the message with the chosen index. The message is sent back to the DB. The content of the second level of information stored in the DB is thereafter sent back to the user 26. This contains the information of the second level and a list of indexes to the subsequent level of information (15). The user replies 27 with a SMS message containing the chosen index for the third level of information, which in turn triggers a SMS message 28 from the DB containing the third hierarchical level of information.

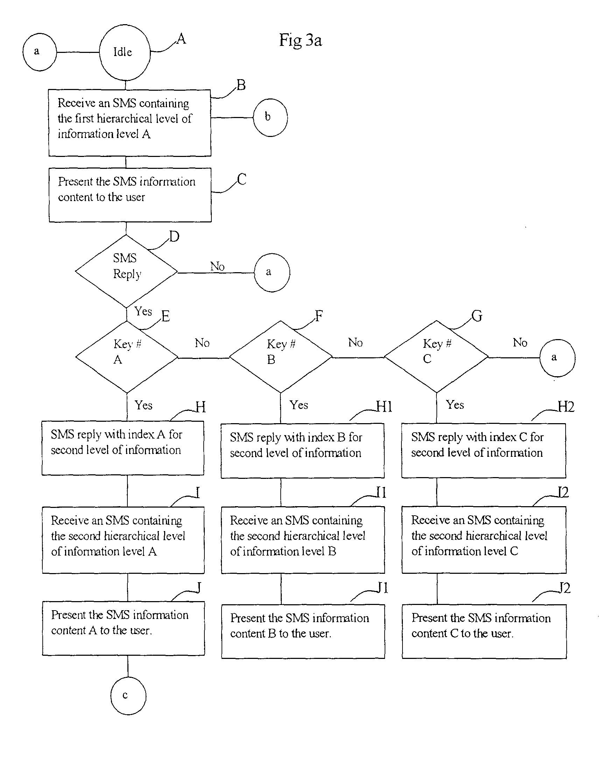

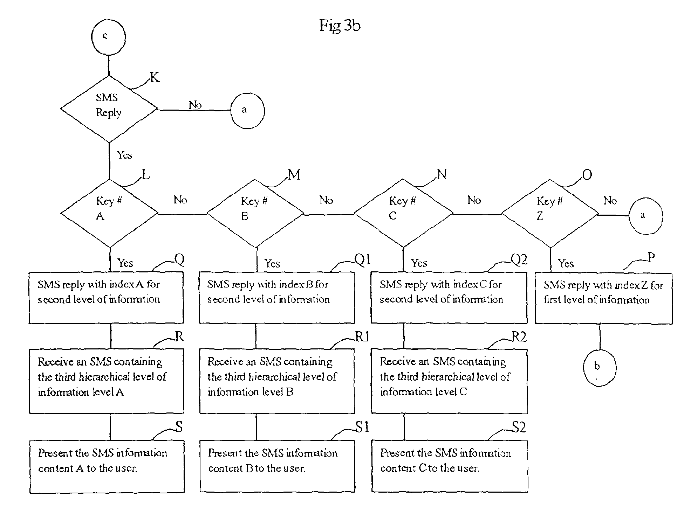

Fig. 3a and Fig. 3b illustrates a method in accordance with this invention. At block A the mobile station 21 is considered to be in an idle state. The idle state is independent of whether the user is actively transmitting voice/data to the base station. At block B the mobile station receives a SMS message from the network that contains the first level of hierarchical information and an index to the second level of information, this is equivalent to 11 in Fig. 1. At block C the content of the SMS message is presented to the user. At block D a determination is made by the user whether a reply to the received SMS message is to be sent. If No, control passes to block A which is the idle state of the mobile station. If Yes, the user replies by pressing one of several keys, in the example #A, #B or #C. Control passes to block E. Blocks E, F and G represent an if-else statement illustrating the effect of the user's key choice. From block E, if the user has chosen to reply with key #A, the control passes to block H. From block F, if the user has chosen to reply with key #B, the control passes to block H1. From block G, if the user has chosen to reply with key #C, the control passes to block H2. If no choice for any of keys #A, #B, #C has been made, control passes to block A which is the idle state of the mobile station. Key #A, key #B and key #C are the indexes (12) to the subsequent level of hierarchical information.

At block H a SMS reply containing the key #A is sent. The SMS reply is send back to the DB according to 25 in Fig. 2. The content of the second level of information stored in the DB is thereafter sent back to the user 26. At block I the mobile station receives a SMS message from the network that contains the second level of hierarchical information and an index to the third level of information according to 14 in Fig. 1. At block J the content of the SMS message is presented to the user.

At block H1 a SMS reply pertaining to key #B is sent. The SMS reply is sent back to the DB according to 25 in Fig. 2. The content of the second level of information stored in the DB is thereafter send back to the user 26. At block I1 the mobile station receives a SMS message from the network that contains the second level of hierarchical information and an index to the third level of information according to 14 in Fig. 1. At block J1 the content of the SMS message is presented to the user.

At block H2 a SMS reply pertaining to key #C is sent. The SMS reply is sent back to the DB according to 25 in Fig. 2. The content of the second level of information stored in the DB is thereafter send back to the user 26. At block I2 the mobile station receives a SMS message from the network that contains the second level of hierarchical information and an index to the third level of information according to 14 in Fig. 1. At block J2 the content of the SMS message is presented to the user.

For the sake of simplicity the message flow for the first index only is shown at block K. At block K a determination is made by the user if a reply to the received SMS message is to be sent. If No, control passes to block A which is the idle state of the mobile station. If Yes, the user replies by pressing one of several keys, in the example #A, #B, #C or #Z. Blocks L, M, N and O illustrate an if-else statement representing the effect of the user's key choice. From block L, if the user has chosen to reply with key #A, control passes to block Q. From block M, if the user has chosen to reply with key #B, control passes to block Q1. From block N, if the user has chosen to reply with key #C, control passes to block Q2. From block O, if the user has chosen to reply with key #Z, control passes to block P where a SMS reply with index Z is sent back to DB and control passes to block B. If no choice for any of keys #A, #B, #C, #Z is made, control passes to block A which is the idle state of the mobile station. Key #A, key #B and key #C are the indexes (15) to the third level of hierarchical information.

At block Q a SMS reply pertaining to key #A is sent. The SMS reply is sent back to the DB according to 27 in Fig. 2. The content of the second level of information stored in the DB is thereafter sent back to the user 28. At block R the mobile station receives a SMS message from the network that contains the second level of hierarchical information and an index to the fourth level of information according to 17 in Fig. 1. At block S the content of the SMS message is presented to the user.

At block Q1 a SMS reply pertaining to key #B is sent. The SMS reply is sent back to the DB according to 27 in Fig. 2. The content of the second level of information stored in the DB is thereafter sent back to the user 28. At block R1 the mobile station receives a SMS message from the network that contains the second level of hierarchical information and an index to the fourth level of information according to 17 in Fig. 1. At block S1 the content of the SMS message is presented to the user.

At block Q2 a SMS reply pertaining to key #C is sent. The SMS reply is sent back to the DB according to 27 in Fig. 2. The content of the second level of information stored in the DB is thereafter sent back to the user 28. At block R2 the mobile station receives a SMS message from the network that contains the second level of hierarchical information and an index to the fourth level of information according to 17 in Fig. 1. At block S2 the content of the SMS message is presented to the user.

At block P a reply pertaining to #Z is sent. The SMS reply is sent back to the DB. The content of the first level of information stored in the DB is then sent back to the user 28, the mobile station assuming the state indicated by B in Fig. 3a. The list of indices may also contain an index pointing back to the previous hierarchical level.

## Claims

1. Method for retrieving hierarchically stored information from a data base, where a first SMS message is sent from a data base via a cellular network to a mobile station, the message containing information pertaining to a first hierarchical level, **characterized in that** the information also contains a list of indices to information pertaining to a subsequent lower hierarchical level, and that a response SMS message is sent back from the mobile station via the cellular network to the data base indicating an index chosen from the said list of indices, whereupon a further SMS message containing at least the information pertaining to the chosen index is sent from the data base to the mobile station via the network.

2. Method according to claim 1, **characterized in that** the information stored in the database is organised into three or more hierarchical levels.

3. Method according to claim 1 or 2, **characterized in that** the list of indices further contains at least one index pointing back to information pertaining to a higher hierarchical level.

4. Method according to claim 3, **characterized in that** the higher hierarchical level is in each case the first hierarchical level.

5. Method according to claim 3, **characterized in that** the higher hierarchical level is in each case the previous hierarchical level.
